# EUROPÄISCHE PATENTSCHRIFT

(11) **EP 2 531 372 B1**
(45) Veröffentlichungstag und Bekanntmachung des Hinweises auf die Patenterteilung: **29.10.2014**
(21) Anmeldenummer: 10801145.3
(22) Anmeldetag: 23.12.2010
(51) Int. Cl.: B60N 2/44, B60N 2/66

(54) **FAHRZEUGSITZSYSTEM**
VEHICLE SEATING SYSTE
SYSTÈME DE SIÈGE DE VÉHICULE

(30) Priorität: 05.02.2010 DE 102010007203
(43) Veröffentlichungstag der Anmeldung: 12.12.2012
(73) Patentinhaber: Daimler AG, 70327 Stuttgart (DE)
(72) Erfinder: FRIDERICH, Sven, 71034 Böblingen (DE); WEISER, Gudrun, 71157 Hildrizhausen (DE)
(74) Vertreter: JENSEN & SON
(86) Internationale Anmeldenummer: PCT/EP2010/007938
(87) Internationale Veröffentlichungsnummer: WO 2011/095201

(56) Entgegenhaltungen:
- DE-A1-102004 050 233
- US-A1- 2009 127 906

## Beschreibung

Die Erfindung betrifft ein Fahrzeugsitzsystem der im Oberbegriff des Patentanspruchs 1 angegebenen Art. Des Weiteren betrifft die Erfindung ein Verfahren zur körperlichen Aktivierung eines Insassen, welcher auf einem Fahrzeugsitz eines solchen Fahrzeugsitzsystems sitzt.

Aus der DE 10 2009 008 421 A1 ist ein Fahrzeugsitz bekannt, in dessen Sitzlehne eine Massageeinrichtung integriert ist, welche eine Mehrzahl von druckbeaufschlagbaren Elementen aufweist, welche zur Beeinflussung der Sitzkontur mittels einer Steuerungseinrichtung ansteuerbar sind, so dass unterschiedliche Abfolgen bzw. Massageprogramme realisierbar sind. Dabei verhält sich ein Insasse des Fahrzeugsitzes passiv und lässt die Massage an sich wirken, wodurch sich sein Wohlbefinden verbessert. Mit zunehmender Fahrtzeit und insbesondere im Stau oder während einer eintönigen Fahrtstrecke ermüdet der Körper und die Aufmerksamkeit sinkt.

Die Druckschrift US A 2009/0127906 offenbart einen Fahrzeugsitz, der in Abhängigkeit von im Vorfeld bestimmten Bewegungs-Grenzwerten einer Massagevorrichtung einen Insassen eines Fahrzeugs derart massiert, dass eine physische Ermüdung beziehungsweise mangelnde Durchblutung seines unteren Lendenwirbelsäulenbereichs vermieden wird. Dabei werden die Bewegungs-Grenzwerte der Massagevorrichtung vor einer Fahrt bestimmt, indem sich ein Insasse des Fahrzeugsitzes auf dem Fahrzeugsitz leicht vor und zurück bewegt, damit sich die Massagevorrichtung an eine belastete "durchgebeugte" beziehungsweise entlastete Stellung der Wirbelsäule anpassen kann. Anhand von Sensoren, die sich innerhalb des Fahrzeugsitzes befinden, können dann Zwischenstellungen des unteren Lendenwirbelsäulenbereichs ermittelt werden und somit die Massagevorrichtung gesteuert werden. Anhand der Ermittlung der Stellung der Wirbelsäule des Fahrersitz-Insassen wird der Grad seiner Ermüdung anzeigen. Die Massagevorrichtung kann dann gezielt von dem Benutzer des Fahrzeugsitzes gesteuert werden. Allerdings muss der Insasse des Fahrzeugs diese erst einschalten, wobei dies immer erst dann geschieht, wenn der Insasse bereits ermüdet ist.

Es ist daher Aufgabe der vorliegenden Erfindung, für einen Insassen eines Fahrzeugsitzes eine Möglichkeit zur Ermunterung zur Aktivierung seines Körpers zu schaffen.

Diese Aufgabe wird erfindungsgemäß durch ein Fahrzeugsitzsystem mit den Merkmalen des Patentanspruchs 1 sowie durch ein Verfahren mit den Merkmalen des Patentanspruchs 5 gelöst. Vorteilhafte Ausgestaltungen mit zweckmäßigen Weiterbildungen der Erfindung sind in den abhängigen Patentansprüchen angegeben.

Zur Lösung der erfindungsgemäßen Aufgabe wird ein Fahrzeugsitzsystem mit einem Fahrzeugsitz, in dessen Sitzlehne eine Massageeinrichtung zur Beeinflussung der Sitzkontur integriert ist, und mit einer Steuerungseinrichtung zur Steuerung der Massageeinrichtung vorgeschlagen, welches eine Kommunikationseinrichtung aufweist, mit welcher in Abhängigkeit von der Steuerung der Massageeinrichtung und bei einem im Fahrersitz laufenden Massageprogramm mindestens eine Anweisung an einen Insassen des Fahrzeugsitzes übermittelbar ist.

Mit anderen Worten ist ein Fahrzeugsitzsystem mit einem eine gesteuerte Massageeinrichtung aufweisenden Fahrzeugsitz und mit einer Kommunikationseinrichtung vorgesehen, mittels welcher bei einem laufenden Massageprogramm der Massageeinrichtung eine Anweisung an einen Insassen gegeben werden kann. Dadurch kann der Insasse ermuntert werden, während der Massage aktiv zu werden, so dass er beispielsweise entsprechend einer gewünschten Wirkung der Massage bewusst mit seinem Körper agiert, wodurch er auch geistig aktiv werden kann.

In vorteilhafter Weiterbildung der Erfindung ist es vorgesehen, dass mit der Kommunikationseinrichtung eine optische und/oder akustische Anweisung an den Insassen des Fahrzeugsitzes abgebbar ist. Dabei hat es sich in weiterer Ausgestaltung der Erfindung als besonders vorteilhaft gezeigt, wenn die optische Anweisung in Textform und/oder die akustische Anweisung eine Sprachansage ist, so dass dem Insassen eine klare und deutliche Instruktion übermittelt werden kann.

In weiterer Ausgestaltung der Erfindung hat es sich darüber hinaus als vorteilhaft erwiesen, wenn die Anweisung der Kommunikationseinrichtung eine Anweisung bezüglich der Körperhaltung des Insassen, seiner Körperspannung, seiner Atmung, seiner Körperbewegung und/ oder einer Reaktion des Insassen auf eine Aktion der Massageeinrichtung ist. Dadurch kann beispielsweise die Koordination und Stabilisation der Rumpfmuskulatur des Insassen aktiviert und verbessert werden, indem der Insasse beispielsweise zur bewussten Aktivierung unterschiedlicher Oberkörperpartien aufgefordert wird. So kann beispielsweise die Reaktion des Insassen ein Drücken gegen mindestens einen Teilbereich der Sitzlehne sein, wenn der Insasse einen Druck der Massageeinrichtung im Rücken spürt.

Die vorstehend im Zusammenhang mit dem erfindungsgemäßen Fahrzeugsitzsystem erläuterten Vorteile gelten in ebensolcher Weise für das erfindungsgemäße Verfahren zur körperlichen Aktivierung eines Insassen nach Patentanspruch 5.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine Seitenansicht eines Insassen eines Personenkraftwagens, dessen Wirbelsäule dargestellt ist, wobei der Insasse mit gerundeter Wirbelsäule auf einem Fahrersitz sitzt; und
- Fig. 2: eine Seitenansicht des Insassen von Fig. 1, bei welcher der Insasse seine Sitzhaltung geändert hat und den Anweisungen eines laufenden Massageprogramms folgt.

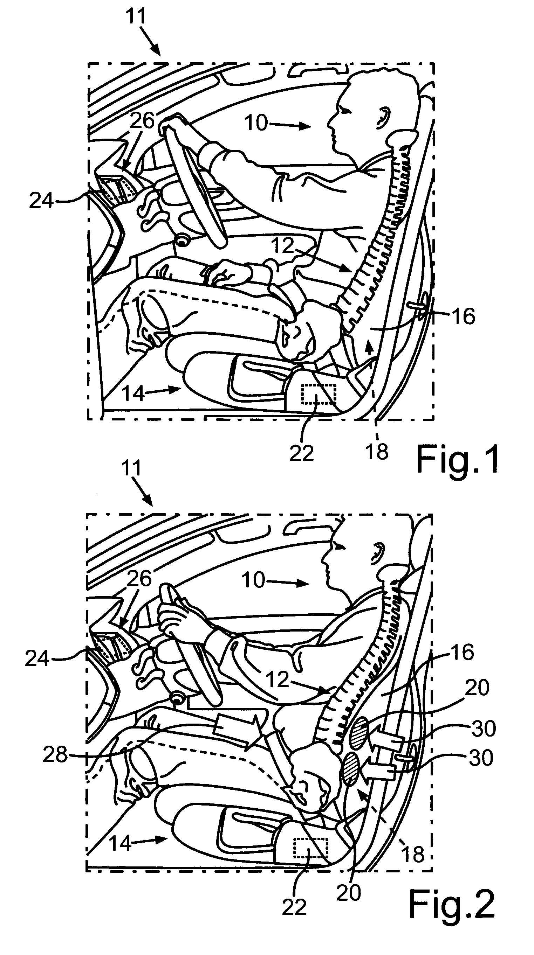

Fig. 1 und 2 zeigen eine Seitenansicht eines Insassen 10 eines Personenkraftwagens 11, dessen Wirbelsäule 12 dargestellt ist und der auf einem fahrerseitigen Fahrzeugsitz 14 sitzt.

Nach langem Sitzen bei Langstreckenfahrten kommt es auch bei ergonomisch optimalem Sitzaufbau zur Ermüdung des Körpers und des Geistes der Insassen. Dies kann zu Veränderungen in der anfangs optimalerweise aufrechten Haltung der Wirbelsäule 12 und zu Fehlhaltungen führen.

In Fig. 1 ist erkennbar, dass die Wirbelsäule 12 des Insassen 10 eine gerundete Haltung aufweist, bei welcher eine verstärkte Beugung der Brustwirbelsäule 12 nach hinten (verstärkte Brustkyphose) mit gleichzeitiger Beckenkippung nach hinten und somit einer Minderung der Hohlheit der Lendenwirbelsäule (Entlordosierung der physiologischen Lendenlordose) stattfindet. Die Belastung der Bandscheiben ist bei gerundeter Wirbelsäule 12 ungleichmäßig, wodurch es zu einer Verlagerung des Bandscheibenkerns und zu einer Verspannung der Rückenmuskulatur kommen kann, die nicht erwünscht sind.

Um diesen Zustand zu ändern, ist in dem Personenkraftwagen ein Fahrzeugsitzsystem vorgesehen, bei welchem der Fahrzeugsitz 14 eine Sitzlehne 16 aufweist, in welcher eine Massageeinrichtung 18 zur Beeinflussung der Sitzkontur integriert ist. In Fig. 2 sind zwei Elemente 20 von einer Mehrzahl von Elementen 20 der Massageeinrichtung 18 schematisch dargestellt, welche zur Beeinflussung der Sitzkontur beispielsweise unter Druckbeaufschlagung pneumatisch aufgeblasen werden können. Solche Elemente 20 können in die Sitzlehne 16 in Bezug auf eine Mittellinie links, rechts und entlang der Mittellinie der Sitzlehne 16 symmetrisch angeordnet sein. Die Massageeinrichtung 18 wird mittels einer hier lediglich schematisch angedeuteten Steuerungseinrichtung 22 zur Durchführung von Massageprogrammen gesteuert.

Das Fahrzeugsitzsystem weist zudem eine hier lediglich schematisch angedeutete Kommunikationseinrichtung 24 auf, mit welcher in Abhängigkeit von der Steuerung der Massageeinrichtung und bei einem im Fahrzeugsitz laufenden Massageprogramm Anweisungen an einen Insassen des Fahrzeugsitzes übermittelt werden können. Die Kommunikationseinrichtung 24 weist eine Anzeige 26 auf, in welcher die Anweisungen in Textform erscheinen. Dabei kann die Kommunikationseinrichtung 24 bzw. die Anzeige 26 beispielsweise Teil eines Infotainmentsystems sein.

Ergänzend oder alternativ zu der Kommunikationseinrichtung 24 mit einer Anzeige 26, mittels welcher die Anweisungen optisch übermittelt werden, ist auch eine akustische Anweisung, beispielsweise in Form einer Sprachansage, denkbar.

Der Insasse 10 wird durch die Anweisungen aufgefordert, während der Massage aktiv zu werden, so dass er entsprechend einer gewünschten Wirkung der Massage mit seinem Körper bewusst agiert, wodurch er auch geistig aktiv wird.

In Fig. 2 ist eine Seitenansicht des Insassen 10 von Fig. 1 gezeigt, bei welcher der Insasse 10 nach Anweisung der Kommunikationseinrichtung 24 seine Sitzhaltung geändert hat und den weiteren Anweisungen eines laufenden Massageprogramms folgt. Die Anweisungen können sich auf die Körperhaltung des Insassen, seine Körperspannung, seine Atmung, seine Körperbewegung und auf eine Reaktion des Insassen 10 auf eine Aktion der Massageeinrichtung beziehen. Eine solche Reaktion des Insassen 10 kann beispielsweise, wie in Fig. 2 durch den Pfeil 28 dargestellt, ein Drücken gegen einen Teilbereich der Sitzlehne 16 sein, wenn der Insasse einen aus den unteren zwei Elementen 20 der Massageeinrichtung 18 stammenden Druck, wie in Fig. 2 durch die Pfeile 30 dargestellt, im Rücken spürt.

Solche Anweisungen können beispielsweise wie folgt lauten:
- Sitzen Sie aufrecht und angelehnt im Sitz.
- Bleiben Sie auch während der Übung aufrecht.
- Sobald Sie einen Druck hinten am Rücken wahrnehmen, drücken Sie an dieser Stelle dagegen.
- Bei Druck am unteren Rücken spannen Sie die Bauchmuskeln an und drücken Sie den unteren Rücken für 4 Sekunden nach hinten. Bitte nicht mit Füßen und Beinen drücken. Sie bleiben aufrecht, Oberkörper gerade.
- Bei Druck am oberen Rücken drücken Sie genau an dieser Stelle dagegen. Genauso bei Druck an weiteren Stellen.
- Atmen Sie weiter. Alternativ atmen Sie aus bei jeder Anspannung und bei jedem Gegendrücken.
- Sobald Sie einen Druck hinten am unteren Rücken wahrnehmen, drehen Sie das Becken nach hinten.
- Druck unter den Füßen bleibt gleich! Kein Stemmen gegen die Pedale.
- Sie nehmen wahr, wie die Bauchmuskeln anspannen.
- Der Oberkörper bleibt gerade.
- Die Atmung fließt weiter.

Im Laufe des Massageprogramms können so unterschiedliche Oberkörperpartien angesprochen und aktiviert werden. Es ist ersichtlich, dass diese Ermunterung des Menschen, aktiv mitzumachen, zu einer Koordination und Stabilisation der Rumpfmuskulatur führt. Im Gegensatz zur Massage, die am Insassen passiv wirkt, regt diese Funktion Körper und Geist an.

## Patentansprüche

1. Fahrzeugsitzsystem mit einem Fahrzeugsitz (14), in dessen Sitzlehne (16) eine Massageeinrichtung (18) zur Beeinflussung der Sitzkontur integriert ist, und mit einer Steuerungseinrichtung (22) zur Steuerung der Massageeinrichtung (18),
**dadurch gekennzeichnet, dass**
das Fahrzeugsitzsystem eine Kommunikationseinrichtung (24) aufweist, mit welcher in Abhängigkeit von der Steuerung der Massageeinrichtung (18) und bei einem im Fahrersitz (14) laufenden Massageprogramm mindestens eine Anweisung an einen Insassen (10) des Fahrzeugsitzes (14) übermittelbar ist.

2. Fahrzeugsitzsystem nach Anspruch 1,
**dadurch gekennzeichnet, dass**
mit der Kommunikationseinrichtung (24) eine optische und/oder akustische Anweisung an den Insassen (10) des Fahrzeugsitzes abgebbar ist.

3. Fahrzeugsitzsystem nach Anspruch 2,
**dadurch gekennzeichnet, dass**
die optische Anweisung in Textform und/oder die akustische Anweisung eine Sprachansage ist.

4. Fahrzeugsitzsystem nach einem der vorgehenden Ansprüche,
**dadurch gekennzeichnet, dass**
die Anweisung der Kommunikationseinrichtung (24) eine Anweisung bezüglich der Körperhaltung des Insassen (10), seiner Körperspannung, seiner Atmung, seiner Körperbewegung und/ oder einer Reaktion des Insassen auf eine Aktion der Massageeinrichtung ist.

5. Verfahren zur körperlichen Aktivierung eines Insassen (10), der auf einem Fahrzeugsitz (14) eines Fahrzeugsitzsystems sitzt, in dessen Sitzlehne (16) eine Massageeinrichtung (18) zur Beeinflussung der Sitzkontur integriert ist, welche mittels einer Steuerungseinrichtung (22) des Fahrzeugsitzsystems gesteuert wird,
**dadurch gekennzeichnet, dass**
an den Insassen (10) des Fahrzeugsitzes (14) in Abhängigkeit von der Steuerung der Massageeinrichtung (18) und bei einem im Fahrersitz (14) laufenden Massageprogramm mindestens eine Anweisung übermittelt wird.

## Claims

1. Vehicle seating system, comprising a vehicle seat (14) into the backrest (16) of which is integrated a massaging device (18) for influencing the seat contour, and further comprising a control unit (22) for the control of the massaging device (18),
**characterised in that**
the vehicle seating system comprises a communication device (24) by means of which at least one instruction can be transmitted to an occupant (10) of the vehicle seat (14) as a function of the control of the massaging device (18) if a massage programme is running in the vehicle seat (14).

2. Vehicle seating system according to claim 1,
**characterised in that**
a visual and/or audible instruction can be given to the occupant (10) of the vehicle seat by means of the communication device (24).

3. Vehicle seating system according to claim 2,
**characterised in that**
the visual instruction is given in text form and/or the audible instruction is a spoken announcement.

4. Vehicle seating system according to any of the preceding claims,
**characterised in that**
the instruction of the communication device (24) is an instruction relating to the posture, the bodily tension, the breathing, the bodily movement and/or the reaction of the occupant (10) to an action of the massaging device.

5. Method for the bodily activation of an occupant (10) sitting on a vehicle seat (14) of a vehicle seating system, into the backrest (16) of which vehicle seat (14) is integrated a massaging device (18) controlled by means of a control unit (22) of the vehicle seating system for influencing the seat contour,
**characterised in that**
at least one instruction is transmitted to the occupant (10) of the vehicle seat (14) as a function of the control of the massaging device (18) if a massage programme is running in the vehicle seat (14).

## Revendications

1. Système de siège de véhicule doté d'un siège (14) de véhicule, dont le dossier de siège (16) intègre un dispositif de message (18) destiné à influencer le contour de siège, et doté d'un dispositif de commande (22) destiné à commander le dispositif de massage (18), **caractérisé en ce que** le système de siège de véhicule comprend un dispositif de communication (24) par le biais duquel en fonction de la commande du dispositif de massage (18) et lors d'un programme de message en cours dans le siège de conducteur au moins une indication peut être transmise à un occupant (10) du siège de véhicule.

2. Système de siège de véhicule selon la revendication 1, **caractérisé en ce que** le dispositif de communication (24) peut délivrer une indication optique et/ou sonore à l'occupant (10) du siège de véhicule.

3. Système de siège de véhicule selon la revendication 2, caractérisé en que l'indication optique s'affiche sous forme de texte et/ou l'indication sonore est une annonce vocale.

4. Système de siège de véhicule selon l'une quelconque des revendications précédentes, **caractérisé en ce que** l'indication du dispositif de communication (24) est une indication relative à la tenue corporelle de l'occupant (10), la tension de corps, sa respiration, son mouvement corporel et/ou une réaction de l'occupant à une action du dispositif de massage.

5. Procédé d'activation corporelle d'un occupant (10) qui est assis dans un siège (14) de véhicule d'un système de siège de véhicule, dont le dossier (16) de siège intègre un dispositif de massage destiné à influencer le contour de siège, ledit dispositif de massage étant commandé par un dispositif de commande (22) du système de siège de véhicule, **caractérisé en ce qu'**au moins une indication est transmise à l'occupant (10) du siège de véhicule en fonction de la commande du dispositif de massage (18) et lors d'un programme de massage en cours dans le siège (14) de véhicule.
